# FASCICULE DE BREVET EUROPEEN

(11) **EP 2 629 991 B1**
(45) Date de publication et mention de la délivrance du brevet: **07.01.2015**
(21) Numéro de dépôt: 11832111.6
(22) Date de dépôt: 13.10.2011
(51) Int. Cl.: B60C 19/12, B29C 73/16, C08K 5/00, C08L 9/00

(54) **BANDAGE PNEUMATIQUE COMPRENANT UNE COUCHE AUTO-OBTURANTE A GRADIENT AXIAL DE FLUAGE**
REIFEN MIT EINER SELBSTDICHTUNGSSCHICHT MIT EINEM AXIALEN STRÖMUNGSGEFÄLLE
TYRE COMPRISING A SELF-SEALING LAYER HAVING AN AXIAL FLOW GRADIENT

(30) Priorité: 18.10.2010 FR 1058487
(43) Date de publication de la demande: 28.08.2013
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: VOGE, Bozena, F-63040 Clermont-Ferrand Cedex 9 (FR); MERINO LOPEZ, José, F-63040 Clermont-Ferrand Cedex 9 (FR); AHOUANTO, Michel, F-63040 Clermont-Ferrand Cedex 9 (FR)
(74) Mandataire: Dequire, Philippe Jean-Marie Denis
(86) Numéro de dépôt international: PCT/FR2011/052388
(87) Numéro de publication internationale: WO 2012/052662

(56) Documents cités:
- WO-A1-03/101709
- WO-A1-2010/012413
- WO-A2-2010/012412
- FR-A1- 2 939 145

## Description

L'invention concerne le domaine des bandages pneumatiques et plus particulièrement celui des bandages pneumatiques munis de moyens d'auto-obturation d'une perforation dans le bandage pneumatique.

De manière générale, un bandage pneumatique comprend une couche interne d'étanchéité délimitant le volume interne du bandage pneumatique. Cette couche comprend généralement une gomme de type butyl connue pour être imperméable à l'air.

Lors de son utilisation, le bandage pneumatique peut subir une perforation suite à la pénétration d'un objet perforant dans le bandage pneumatique, par exemple un clou. Cette perforation entraîne la crevaison du bandage pneumatique.

Afin d'éviter la crevaison du bandage pneumatique, il a été proposé de disposer au contact de la couche interne d'étanchéité une couche supplémentaire d'un produit relativement souple et pouvant fluer facilement. Ainsi, lors d'une perforation, le produit de la couche supplémentaire, en raison de sa souplesse et de sa capacité à fluer facilement, pénètre dans la perforation et évite la crevaison du bandage pneumatique. Un tel produit présentant une relative souplesse et une capacité à fluer facilement est dit auto-obturant.

Toutefois, la mise au point du produit auto-obturant est relativement complexe. En effet, lorsque le produit est trop souple et/ou présente une capacité à fluer trop grande, le produit auto-obturant peut fluer sous l'effet de la force centrifuge lors de l'utilisation du bandage pneumatique. Ainsi, le produit flue axialement vers le centre du bandage pneumatique. Les parties axialement externes ou épaules du bandage pneumatique sont alors moins bien protégées. En outre, le produit peut fluer axialement vers le centre du bandage pneumatique même quand le bandage pneumatique est à l'arrêt, en particulier dans des conditions de hautes températures. De plus, si l'objet perforant est retiré du bandage pneumatique, le produit auto-obturant peut fluer par la perforation et s'échapper du bandage pneumatique. La fonction anti-crevaison n'est alors plus assurée.

En outre, lorsque le produit est trop rigide et/ou présente une capacité à fluer trop petite, le produit ne flue pas suffisamment dans la perforation, notamment par temps froid.

L'invention a donc pour but de fournir une couche de produit auto-obturant plus efficace.

A cet effet, l'invention a pour objet un bandage pneumatique comprenant une couche interne d'étanchéité délimitant en partie le volume interne du bandage pneumatique, le bandage pneumatique comprenant une couche d'au moins un produit auto-obturant, dite couche auto-obturante, disposée radialement intérieurement par rapport à la couche interne d'étanchéité, la couche auto-obturante présentant un indicateur de résistance au fluage axialement croissant du plan médian vers l'extérieur du bandage pneumatique.

La couche assure efficacement la fonction d'auto-obturation et de façon durable en service. En effet, la partie qui flue le plus est disposée dans la partie centrale du bandage pneumatique, là où les risques de fluage sont les plus réduits. Les parties axialement externes ou épaules du bandage pneumatique sont protégées par la partie qui flue moins mais qui assure toutefois une fonction anti-crevaison suffisante.

La croissance axiale d'un indicateur correspond à une augmentation de l'indicateur lorsque l'on se déplace axialement dans la couche de produit auto-obturant du plan médian du bandage pneumatique vers l'extérieur du bandage pneumatique. Ainsi, une croissance peut être continue, c'est-à-dire que l'indicateur décroît puis croît constamment lorsque l'on se déplace axialement d'une épaule à l'autre dans la couche de produit auto-obturant. Une croissance peut également être discontinue, c'est-à-dire que l'indicateur varie par paliers lorsque l'on se déplace axialement dans la couche de produit auto-obturant.

L'indicateur de résistance au fluage est représentatif de la capacité du produit à résister à une déformation sous l'effet d'une contrainte pendant une certaine durée. Plus l'indicateur est faible, plus le produit peut fluer, plus l'indicateur est élevé, moins le produit peut fluer.

Dans la présente description, sauf indication expresse différence, tous les pourcentages (%) indiqués sont des % en masse. D'autre part, tout intervalle de valeurs désigné par l'expression « entre a et b » représente le domaine de valeurs allant de plus de a à moins de b (c'est-à-dire bornes a et b exclues) tandis que tout intervalle de valeurs désigné par l'expression « de a à b » signifie le domaine de valeurs allant de la borne « a » jusqu'à la borne « b » c'est-à-dire incluant les bornes strictes « a » et « b ».

Dans les compositions élastomère de la présente description, le sigle « pce » signifie parties en poids pour cent parties d'élastomère solide.

Avantageusement, le produit auto-obturant est une composition élastomère comportant au moins, à titre d'élastomère majoritaire (préférentiellement pour plus de 50 pce), un élastomère diénique, une résine hydrocarbonée, un plastifiant liquide dont la température de transition vitreuse est inférieure à -10 °C, de préférence -20°C, voire -30°C, et éventuellement une charge.

De préférence, le produit auto-obturant comprend:
- entre 20 et 90 pce de la résine hydrocarbonée ;
- au plus 60 pce du plastifiant liquide;
- au plus 60 pce de charges.

De préférence, le taux de plastifiant liquide de la couche auto-obturante est maximal dans une portion axialement centrale de la couche auto-obturante et minimal dans une portion d'extrémité axiale de la couche auto-obturante. En d'autres termes, la couche auto-obturante présente un taux de plastifiant liquide axialement décroissant vers l'extérieur du bandage pneumatique.

La différence de taux est préférentiellement supérieure à 5 pce.

De préférence, le taux de charges de la couche auto-obturante est minimal dans une portion axialement centrale de la couche auto-obturante et maximal dans une portion d'extrémité axiale de la couche auto-obturante. En d'autres termes, la couche auto-obturante présente un taux de charges axialement croissant vers l'extérieur du bandage pneumatique.

Selon un autre mode de réalisation alternatif ou complémentaire, le produit auto-obturant comportant en outre un système de réticulation, le taux du système de réticulation de la couche auto-obturante est minimal dans une portion axialement centrale de la couche auto-obturante et maximal dans une portion d'extrémité axiale de la couche auto-obturante. En d'autres termes, la couche auto-obturante présente un taux du système de réticulation axialement croissant vers l'extérieur du bandage pneumatique.

Selon un mode de réalisation préférentiel, la couche auto-obturante comprend des première et deuxième couches respectivement de premier et deuxième produits auto-obturant distincts, dans lequel la première couche de premier produit auto-obturant est disposée axialement de part et d'autre de la deuxième couche de deuxième produit auto-obturant disposée dans une portion axialement centrale du bandage pneumatique et dans lequel le premier produit auto-obturant présente un indicateur de résistance au fluage supérieur à un indicateur de résistance au fluage du deuxième produit auto-obturant.

Selon d'autres caractéristiques du bandage pneumatique selon l'invention :
La première et la deuxième couches sont disposées au contact de la couche interne d'étanchéité.
La première couche est placée aux épaules et peut s'étendre jusqu'aux flancs du bandage pneumatique.

Avantageusement, chacun des premier et deuxième produits auto-obturant comprend à titre d'élastomère majoritaire un élastomère diénique, une résine hydrocarbonée, un plastifiant liquide dont la température de transition vitreuse est inférieure à -10 °C, de préférence -20°C, voire -30°C et éventuellement une charge.

De préférence, le premier produit auto-obturant comprend:
- entre 20 et 70 pce d'une résine hydrocarbonée ;
- au plus 20 pce d'un plastifiant liquide, de préférence au plus 2 pce du plastifiant liquide;
- au plus 60 pce de charges.

De préférence, le deuxième produit auto-obturant comprend:
- entre 30 et 90 pce d'une résine hydrocarbonée ;
- au plus 60 pce d'un plastifiant liquide;
- au plus 30 pce de charges.

L'indicateur de résistance au fluage peut être une mesure de consistance Mooney, réalisée à 60°C avec un rotor de type L.

De préférence, l'amplitude de variation de l'indicateur de résistance au fluage dans la couche auto-obturante est comprise entre 3 et 25 unités Mooney (UM), et très préférentiellement comprise entre 5 et 20 unités Mooney (UM).

En dessous de 3 UM, l'augmentation de résistance au fluage de la couche auto-obturante disposée aux épaules n'est plus suffisante pour garantir une résistance suffisante au fluage et au-delà de 25 unités UM, c'est la performance anti-crevaison qui n'est plus assurée.

Selon d'autres caractéristiques optionnelles du bandage pneumatique selon l'invention:
- Le taux des charges du premier produit auto-obturant est supérieur au taux des charges du deuxième produit obturant;
- Le taux du plastifiant liquide du premier produit auto-obturant est inférieur au taux du plastifiant liquide du deuxième produit auto-obturant ;
- Les produits comportent en outre un système de réticulation de l'élastomère diénique et le taux du système de réticulation du premier produit auto-obturant est supérieur au taux du système de réticulation du deuxième produit auto-obturant

Les caractéristiques relatives aux taux de charges, du plastifiant liquide et du système de réticulation des premier et deuxième produits auto-obturant permettent, de façon isolée ou en synergie, de rendre le premier produit auto-obturant plus résistant au fluage c'est-à-dire moins fluant que le deuxième produit auto-obturant mais aussi de diminuer le niveau de collant du premier produit auto-obturant par rapport au niveau de collant du deuxième produit auto-obturant.

L'élastomère diénique est de type saturé ou insaturé. On entend par élastomère diénique insaturé un élastomère diénique issu au moins en partie de monomères diènes conjugués et ayant un taux d'unités issus de diènes conjugués qui est supérieur à 30% (% en moles), de préférence 50%. Un tel élastomère diénique est préférentiellement choisi dans le groupe constitué par les polybutadiènes (BR), le caoutchouc naturel (NR), les polyisoprènes de synthèse (IR), les copolymères de butadiènes, les copolymères d'isoprène et les mélanges de tels élastomères. L'élastomère diénique insaturé est plus avantageusement un élastomère isoprénique, de préférence choisi dans le groupe constitué par le caoutchouc naturel, les polyisoprènes de synthèse et les mélanges de tels élastomères.

La dénomination "résine" est réservée dans la présente demande, par définition connue de l'homme du métier, à un composé qui est solide à température ambiante (23°C), par opposition à un composé plastifiant liquide tel qu'une huile.

La résine hydrocarbonée est choisie dans le groupe constitué par les résines d'homopolymère ou copolymère de cyclopentadiène (CPD) ou dicyclopentadiène (DCPD), les résines d'homopolymère ou copolymère terpène, les résines d'homopolymère ou copolymère de coupe C5, et les mélanges de ces résines. Parmi les résines copolymères ci-dessus, la résine hydrocarbonée est avantageusement choisie dans le groupe constitué par les résines de copolymère CPD/vinylaromatique, les résines de copolymère DCPD/vinylaromatique, les résines de copolymère CPD/terpène, les résines de copolymère DCPD/terpène, les résines de copolymère CPD/coupe C5, les résines de copolymère DCPD/coupe C5, les résines de copolymère terpène/vinylaromatique, les résines de copolymère coupe C5/vinylaromatique et les mélanges de ces résines.

L'agent plastifiant liquide (à 23°C) dit à basse Tg (Température de transition vitreuse) a pour fonction de ramollir le produit auto-obturant en diluant l'élastomère diénique et la résine hydrocarbonée, améliorant en particulier les performances d'auto-obturation à froid.

L'agent plastifiant est choisi dans le groupe constitué par les élastomères liquides, les huiles polyoléfiniques, les huiles naphténiques, les huiles paraffiniques, les huiles DAE (Distillate Aromatic Extracts), les huiles MES (Medium Extracted Extracts), les huiles TDAE (Treated Distillate Aromatic Extracts), les huiles minérales, les huiles végétales, les plastifiants éthers, les plastifiants phosphates, les plastifiants sulfonates et les mélanges de ces composés. Préférentiellement, le plastifiant liquide est choisi dans le groupe constitué par les élastomères liquides, les huiles polyoléfiniques, les huiles végétales et les mélanges de ces composés. Très préférentiellement, le plastifiant liquide est choisi dans le groupe de polybutadiènes liquides, des polyisoprènes liquides, les huiles végétales et les mélanges de ces composés.

Les charges sont du type renforçantes, non renforçantes ou inertes et ont pour fonction de donner une tenue mécanique minimale au produit auto-obturant. Les charges sont par exemple des nanoparticules de noir de carbone ou des charges inorganiques renforçantes ou un mélange de ces deux types de charge. Les charges non renforçantes peuvent être des microparticules de carbonates de calcium naturels (craie) ou synthétiques, de silicates synthétiques ou naturels (tels que kaolin, talc, mica) de silices broyées, oxydes de titane, alumines ou encore aluminosilicates.

Divers additifs peuvent également être ajoutés, de préférence dans une quantité inférieure à 20 pce, plus préférentiellement à 15 pce. Les additifs comprennent des agents de protection tels que des anti-UV, anti-oxydants ou anti-ozonants, divers autres stabilisants, des agents colorants avantageusement utilisables pour la coloration de chaque produit auto-obturant.

Chaque produit auto-obturant peut aussi comprendre optionnellement un système de réticulation de l'élastomère diénique. Ce système est du type de vulcanisation, en l'espèce à base de souffre.

L'invention a également pour objet un procédé de fabrication d'une ébauche crue d'un bandage pneumatique dans lequel:
- on dépose au moins une couche d'au moins un produit auto-obturant, dite couche auto-obturante, sur une surface d'un tambour de confection, la couche auto-obturante présentant un indicateur de résistance au fluage axialement croissant du plan médian vers l'extérieur du bandage pneumatique,
- on dépose une couche interne d'étanchéité au contact de la couche auto-obturante.

L'invention sera mieux comprise à la lecture de la description qui va suivre, donnée uniquement à titre d'exemple non limitatif et faite en se référant aux dessins dans lesquels :
- la figure 1 illustre une vue en coupe radiale d'un bandage pneumatique selon un mode de réalisation de l'invention ;
- la figure 2 illustre une vue en coupe radiale d'un bandage pneumatique selon un second mode de réalisation de l'invention ; et
- la figure 3 présente une vue en coupe radiale partielle d'une ébauche de pneumatique conforme à un mode de réalisation de l'invention.

Sur les figures, on a représenté des axes X, Y, Z orthogonaux entre eux correspondant aux orientations habituelles radiale (X), axiale (Y) et circonférentielle (Z) d'un bandage pneumatique.

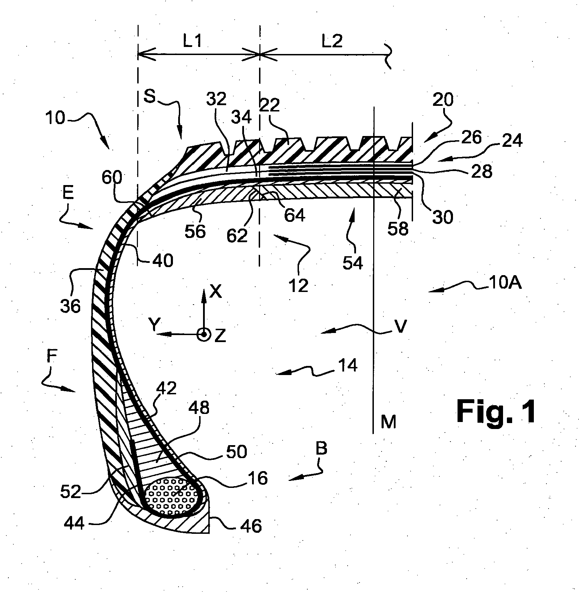

On a représenté sur la figure 1 un bandage pneumatique selon un mode de réalisation de l'invention désigné par la référence générale 10A.

En l'espèce, le bandage pneumatique 10Aest destiné à être monté sur une roue de véhicule automobile de type tourisme.

De façon classique, le bandage pneumatique 10A comprend un sommet S prolongé par deux épaules E, deux flancs F et deux bourrelets B. Un seul flanc F, une seule épaule E et un seul bourrelet B sont représentés sur les figures.

Deux tringles 16 (une seule est représentée) sont noyées dans les bourrelets B. Les deux tringles 16 sont agencées symétriquement par rapport à un plan radial médian M du bandage pneumatique.

Chaque tringle 16 est de révolution autour d'un axe de référence. Cet axe de référence, sensiblement parallèle à la direction Y, est sensiblement confondu avec un axe de révolution du bandage pneumatique.

Le sommet S comprend une bande de roulement 20, munie de sculptures 22, ainsi qu'une armature 24. Cette armature 24 comprend des nappes de renforts métalliques ou textiles 26, 28 et 30 noyées dans des masses de gomme 32 et 34.

Une masse de gomme 36 s'étend radialement du sommet jusqu'au niveau de la tringle 16 du bourrelet B en délimitant une surface extérieure 38 de l'épaule E, du flanc F et du bourrelet B.

Le bandage pneumatique 10A comprend également une couche de gomme intérieure d'étanchéité 40 ainsi qu'une nappe carcasse 42. La couche 40 délimite au moins en partie le volume interne V du bandage pneumatique 10A et est réalisée dans une gomme de type butyl. La couche 40 et la nappe 42 sont de forme générale toroïdale et sont toutes deux coaxiales aux tringles 16. Les couche 40 et nappe 42 s'étendent entre les deux tringles annulaires 16 du bandage pneumatique 10Aen passant par le sommet S.

Dans le bourrelet B du bandage pneumatique 10A, la nappe carcasse 42 comprend une partie repliée 44 autour de la tringle 16. Le bourrelet B comprend également une masse de gomme de protection 46 annulaire destinée à permettre, en partie, l'accrochage radial et axial du bandage pneumatique 10Asur une jante.

Le bourrelet B du bandage pneumatique 10A comprend également une masse de gomme 48 pour le bourrage d'un volume compris entre la partie repliée 44 de la nappe carcasse 42 et une partie 50 de la nappe carcasse 42 en vis-à-vis axialement de la partie repliée 44. Le bourrelet B comprend aussi une masse de gomme 52. Cette masse 52 forme une masse de bourrage recouvrant, au moins partiellement, la partie repliée 44 de la nappe carcasse 42. La masse 52 est séparée localement de la masse 48 par la partie repliée 44.

Le bandage pneumatique 10A comprend également une couche 54 d'au moins un produit auto-obturant disposée radialement de façon interne par rapport à la couche de gomme d'étanchéité 40. En l'espèce, la couche 54 est appliquée au contact de la couche interne d'étanchéité 40. La couche 54 délimite au moins en partie le volume interne V du bandage pneumatique.

La couche 54 comprend une première couche 56 d'un premier produit auto-obturant O1 disposée sur des portions d'extrémité axiale L1 au niveau des épaules du bandage pneumatique 10A. La couche 54 comprend également une deuxième couche 58 d'un deuxième produit auto-obturant 02 distinct du premier produit O1. La seconde couche 58 est disposée axialement entre les deux parties de la première couche 56 dans une portion axialement centrale L2 du bandage pneumatique 10A. Les deux couches 56 et 58 sont en contact avec la couche d'étanchéité 40.

Chacun des premier et deuxième produits auto-obturant O1, 02 comprend, à titre d'élastomère majoritaire, un élastomère diénique saturé, une résine hydrocarbonée, un plastifiant liquide dont la température de transition vitreuse est inférieure à -10 °C et éventuellement une charge et un système de réticulation.

Le premier produit auto-obturant O1 comprend entre 20 et 70 pce de la résine hydrocarbonée, au plus 20 pce du plastifiant liquide et au plus 60 pce des charges. En l'espèce, le premier produit auto-obturant O1 comprend avantageusement au plus 2 pce du plastifiant liquide. De préférence, l'élastomère diénique est saturé.

Le deuxième produit auto-obturant 02 comprend entre 30 et 90 pce de la résine hydrocarbonée, au plus 60 pce du plastifiant liquide et au plus 30 pce des charges. De préférence, l'élastomère diénique est insaturé.

Le taux de charges de la couche auto-obturante 54 est minimal dans la portion axialement centrale L2 de la couche auto-obturante 54 et maximal dans la portion d'extrémité axiale L1 de la couche auto-obturante 54. Ici, le taux des charges du premier produit auto-obturant O1 est supérieur ou égal au taux des charges du deuxième produit auto-obturant 02 si bien que la couche auto-obturante 54 présente un taux de charges axialement croissant vers l'extérieur du bandage pneumatique.

Le taux de plastifiant liquide de la couche auto-obturante 54 est maximal dans la portion axialement centrale L2 de la couche auto-obturante 54 et minimal dans la portion d'extrémité axiale L1 de la couche auto-obturante 54. Ici, le taux du plastifiant liquide du premier produit auto-obturant O1 est inférieur au taux du plastifiant liquide du deuxième produit auto-obturant 02 si bien que la couche auto-obturante 54 présente un taux de plastifiant liquide axialement décroissant vers l'extérieur du bandage pneumatique.

Le taux du système de réticulation de la couche auto-obturante 54 est minimal dans la portion axialement centrale L2 de la couche auto-obturante 54 et maximal dans la portion d'extrémité axiale L1 de la couche auto-obturante 54. Ici, le taux du système de réticulation du premier produit auto-obturant O1 est supérieur ou égal au taux du système de réticulation du deuxième produit auto-obturant 02 si bien que la couche auto-obturante 54 présente un taux du système de réticulation axialement croissant vers l'extérieur du bandage pneumatique.

Les première et deuxième couches 56, 58 recouvrent directement la couche interne d'étanchéité 40 et délimitent en partie le volume interne du bandage pneumatique 10A. La première couche 56 comprend deux bords d'extrémités 60 axialement externes et 62 axialement internes. La deuxième couche 58 comprend également deux bords d'extrémités 64. En l'espèce, chaque bord 60 est incliné axialement vers l'extérieur du bandage pneumatique lorsqu'on se déplace radialement vers l'intérieur du bandage pneumatique. Les bords 62 et les bords 64 sont inclinés axialement vers l'intérieur du bandage pneumatique lorsqu'on se déplace radialement vers l'intérieur du bandage pneumatique. De cette façon, la couche 58 est bloquée et maintenue contre la couche interne d'étanchéité 40 par la couche 56.

La couche 54 présente un indicateur I de résistance au fluage axialement croissant en s'éloignant du plan médian M du bandage pneumatique. La première couche 56 présente un indicateur I1 de résistance au fluage supérieur à un indicateur I2 de résistance au fluage de la deuxième couche 58. En l'espèce, chaque indicateur de résistance au fluage I, I1, I2 est une valeur d'une mesure de Mooney réalisée avec un rotor de type L à 60°C. Une mesure de Mooney a pour unité l'unité Mooney de sigle UM. La mesure de Mooney est réalisée en utilisant un consistomètre selon la norme ASTM D 1646-99. La mesure de Mooney se fait selon le principe suivant : le mélange généralement cru est moulé dans une enceinte cylindrique chauffée à une température donnée, usuellement 100°C et ici 60°C. Après une minute de préchauffage, le rotor tourne au sein de l'éprouvette à 2 tours par minute et on mesure le couple utile pour entretenir ce mouvement après 4 minutes de rotation.

De préférence, la variation de l'indicateur de résistance au fluage est comprise entre 3 et 25 UM et encore préférentiellement entre 5 et 20 UM.

Il est à noter que les produits auto-obturants décrits présentent un taux de réticulation après la vulcanisation du bandage pneumatique très faible et tel qu'il est toujours possible de caractériser ces produits par leur UM.

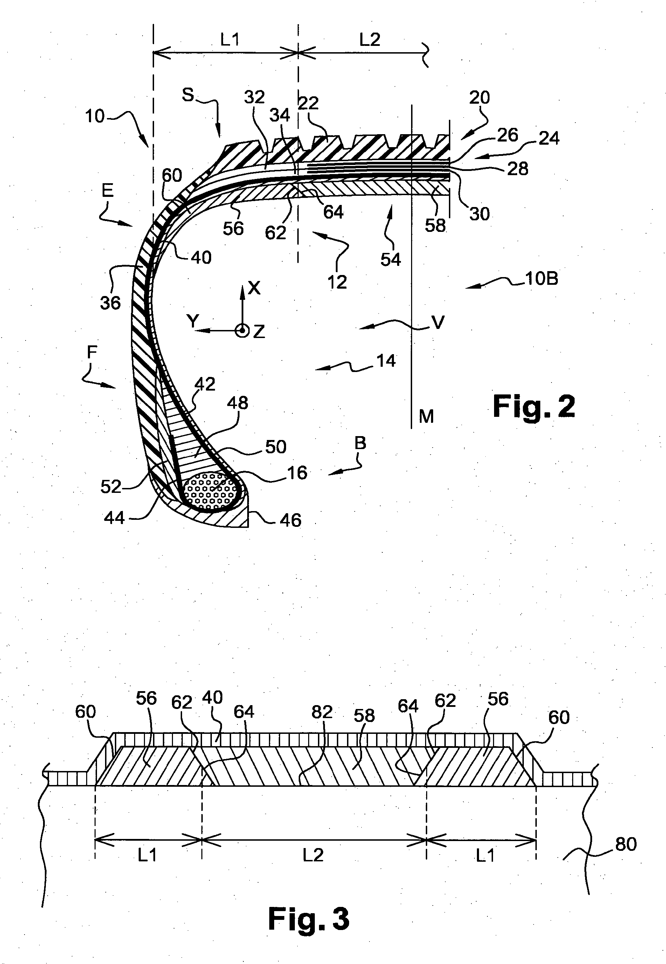

On va maintenant décrire un procédé de fabrication d'une ébauche crue du bandage pneumatique 10A avec l'aide de la figure 3.

On utilise un tambour de confection 80 sensiblement de révolution autour d'un axe confondu avec l'axe de l'ébauche qui est également l'axe du futur bandage pneumatique 10A. Le tambour 80 comporte une surface externe 82 de dépose des différentes couches de produit.

On dépose successivement ou conjointement les première 56 et deuxième 58 couches sur la surface 82 de dépose du tambour de confection. De préférence, on dépose d'abord la première couche 56 puis la deuxième couche 58. Ensuite, on dépose la couche interne d'étanchéité 40 au contact des couches 56 et 58. Enfin, on dépose les couches et nappes suivantes de façon à fabriquer une ébauche permettant d'obtenir le bandage pneumatique 10A de la figure 1.

Dans une variante non illustrée, antérieurement au dépôt des première 56 et deuxième 58 couches sur la surface 82, on dépose un film thermoplastique sur la surface externe 82.

On a représenté sur la figure 2 un bandage pneumatique 10B selon un deuxième mode de réalisation de l'invention. Les éléments analogues à ceux représentés sur la figure précédente sont désignés par des références identiques.

A la différence du premier mode de réalisation, la première couche 56 est au contact de la couche 40 le long de l'épaule E et d'une portion du flanc F. Ce mode de réalisation a l'avantage de protéger le bandage pneumatique 10B contre une crevaison au niveau des épaules E et au niveau des parties adjacentes des flancs F.

L'invention ne se limite pas aux modes de réalisation précédemment décrits.

En effet, on peut augmenter le nombre de couches de produits auto-obturants distincts pour rendre plus progressif la variation de la résistance au fluage de la couche auto-obturante.

## Revendications

1. Bandage pneumatique (10A-10B) comprenant une couche interne (40) d'étanchéité délimitant en partie le volume interne (V) du bandage pneumatique, **caractérisé en ce qu'**il comprend une couche (54) d'au moins un produit auto-obturant (O1, O2), dite couche auto-obturante, disposée radialement intérieurement par rapport à la couche interne d'étanchéité (40), la couche (54) auto-obturante présentant un indicateur (I1, I2) de résistance au fluage axialement croissant du plan médian (M) vers l'extérieur du bandage pneumatique (10A-10B).

2. Bandage pneumatique (10A-10B) selon la revendication 1, dans lequel le produit auto-obturant comprend au moins un élastomère diénique à titre d'élastomère majoritaire, entre 20 et 90 parties en poids pour cent parties d'élastomère solide d'une résine hydrocarbonée, au plus 60 parties en poids pour cent parties d'élastomère solide d'un plastifiant liquide dont la température de transition vitreuse est inférieure à -10°C et au plus 60 parties en poids pour cent parties d'élastomère solide d'une charge.

3. Bandage pneumatique (10A-10B) selon la revendication 2, dans lequel le taux de plastifiant liquide de la couche auto-obturante (54) est maximal dans une portion axialement centrale de la couche auto-obturante (54) et minimal dans une portion d'extrémité axiale de la couche auto-obturante (54).

4. Bandage pneumatique (10A-10B) selon la revendication 3, dans lequel la variation axiale du taux de plastifiant liquide dans la couche auto-obturante est supérieure à 5 parties pour cent parties d'élastomère solide.

5. Bandage pneumatique (10A-10B) selon l'une quelconque des revendications 2 à 4, dans lequel le taux de charges de la couche auto-obturante (54) est minimal dans une portion axialement centrale de la couche auto-obturante (54) et maximal dans une portion d'extrémité axiale de la couche auto-obturante (54).

6. Bandage pneumatique (10A-10B) selon l'une quelconque des revendications précédentes, dans lequel le produit auto-obturant comporte en outre un système de réticulation et dans lequel le taux du système de réticulation est minimal dans une partie axialement centrale de la couche auto-obturante (54) et maximal dans une portion d'extrémité axiale de la couche auto-obturante (54).

7. Bandage pneumatique (10A-10B) selon l'une quelconque des revendications précédentes, dans lequel la couche (54) auto-obturante comprend des première et deuxième couches (56, 58) respectivement de premier et deuxième produits auto-obturant (O1, 02) distincts, dans lequel la première couche de premier produit auto-obturant est disposée axialement de part et d'autre de la deuxième couche de deuxième produit auto-obturant disposée dans une portion axialement centrale du bandage pneumatique et dans lequel le premier produit auto-obturant (O1) présente un indicateur de résistance au fluage (I1) supérieur à un indicateur de résistance au fluage (I2) du deuxième produit auto-obturant (02).

8. Bandage pneumatique (10A-10B) selon la revendication précédente, dans lequel le premier produit auto-obturant (O1) comprend entre 20 et 70 parties en poids d'une résine hydrocarbonée pour cent parties d'élastomère solide, au plus 20 parties en poids d'un plastifiant liquide pour cent parties d'élastomère solide et au plus 60 parties en poids de charges pour cent parties d'élastomère solide.

9. Bandage pneumatique (10A-10B) selon la revendication 7 ou 8, dans lequel le deuxième produit auto-obturant (02) comprend entre 30 et 90 parties en poids d'une résine hydrocarbonée pour cent parties d'élastomère solide, au plus 60 parties en poids d'un plastifiant liquide pour cent parties d'élastomère solide et au plus 30 parties en poids de charges pour cent parties d'élastomère solide.

10. Bandage pneumatique (10A-10B) selon l'une quelconque des revendications précédentes, dans lequel l'indicateur de résistance au fluage est une mesure de consistance Mooney, réalisée à 60°C avec un rotor de type L, et dans lequel l'amplitude de variation de l'indicateur (I1, I2) de résistance au fluage dans la couche auto-obturante (54) est compris entre 3 et 25 unités Mooney (UM).

11. Bandage pneumatique (10A-10B) selon la revendication, dans lequel l'amplitude de variation de l'indicateur (I1, I2) de résistance au fluage dans la couche auto-obturante (54) est compris entre 5 et 20 unités Mooney (UM).

12. Procédé de fabrication d'une ébauche crue d'un bandage pneumatique (10A-10D), **caractérisé en ce que**:
- on dépose au moins une couche (54) d'au moins un produit auto-obturant (O1, 02), dite couche auto-obturante, sur une surface d'un tambour de confection, la couche (54) auto-obturante présentant un indicateur (I1, I2) de résistance au fluage axialement croissant du plan médian (M) vers l'extérieur du bandage pneumatique (10A-10B),
- on dépose une couche interne d'étanchéité (40) au contact de la couche (54) auto-obturante (O1, 02).

## Patentansprüche

1. Luftreifen (10A-10B), umfassend eine innere Dichtungsschicht (40), die einen Teil des Innenvolumens (V) des Luftreifens begrenzt, **dadurch gekennzeichnet, dass** er eine Schicht (54) aus mindestens einem selbstdichtenden Produkt (O1, 02) umfasst, wobei die selbstdichtende Schicht, bezogen auf die innere Dichtungsschicht (40) radial in einem inneren Bereich angebracht ist, wobei die selbstdichtende Schicht (54) einen Kriechfestigkeitsindikator (I1, 12) aufweist, der von der Mittelebene (M) zur Außenseite des Luftreifens (10A-10B) axial ansteigt.

2. Luftreifen (10A-10B) nach Anspruch 1, wobei das selbstdichtende Produkt mindestens ein Dienelastomer als Hauptelastomer, zwischen 20 und 90 Gewichtsteile je hundert Teile festes Elastomer eines Kohlenwasserstoffharzes, höchstens 60 Gewichtsteile je hundert Teile festes Elastomer eines flüssigen Weichmachers, dessen Glasübergangstemperatur unterhalb von -10 °C liegt und höchstens 60 Gewichtsteile je hundert Teile festes Elastomer eines Füllstoffs umfasst.

3. Luftreifen (10A-10B) nach Anspruch 2, wobei der Anteil an flüssigem Weichmacher der selbstdichtenden Schicht (54) in einem axialen Mittelabschnitt der selbstdichtenden Schicht (54) maximal ist und in einem axialen Endabschnitt der selbstdichtenden Schicht (54) minimal ist.

4. Luftreifen (10A-10B) nach Anspruch 3, wobei die axiale Variation des Anteils an flüssigem Weichmacher in der selbstdichtenden Schicht größer als 5 Teile je hundert Teile festes Elastomer ist.

5. Luftreifen (10A-10B) nach einem der Ansprüche 2 bis 4, wobei der Anteil an Füllstoffen der selbstdichtenden Schicht (54) in einem axialen Mittelabschnitt der selbstdichtenden Schicht (54) minimal ist und in einem axialen Endabschnitt der selbstdichtenden Schicht (54) maximal ist.

6. Luftreifen (10A-10B) nach einem der vorhergehenden Ansprüche, wobei das selbstdichtende Produkt ferner ein Vernetzungssystem umfasst und wobei der Anteil des Vernetzungssystems im axialen Mittelabschnitt der selbstdichtenden Schicht (54) minimal ist und in einem axialen Endabschnitt der selbstdichtenden Schicht (54) maximal ist.

7. Luftreifen (10A-10B) nach einem der vorhergehenden Ansprüche, wobei die selbstdichtende Schicht (54) erste und zweite Schichten (56, 58) aus jeweils unterschiedlichen ersten und zweiten selbstdichtenden Produkten (O1, 02) umfasst, wobei die erste Schicht aus dem ersten selbstdichtenden Produkts axial beiderseits der zweiten Schicht aus dem zweiten selbstdichtenden Produkt angebracht ist, die in einem axialen Mittelabschnitt des Luftreifens angebracht ist, und wobei das erste selbstdichtende Produkt (O1) einen Kriechfestigkeitsindikator (I1) aufweist, der größer ist als der Kriechfestigkeitsindikator (12) des zweiten selbstdichtenden Produkts (02).

8. Luftreifen (10A-10B) nach dem vorhergehenden Anspruch, wobei das erste selbstdichtende Produkt (O1) 20 bis 70 Gewichtsteile eines Kohlenwasserstoffharzes je hundert Teile festes Elastomer, höchstens 20 Gewichtsteile eines flüssigen Weichmachers je hundert Teile festes Elastomer und höchstens 60 Gewichtsteile Füllstoffe je hundert Teile festes Elastomer umfasst.

9. Luftreifen (10A-10B) nach Anspruch 7 oder 8, wobei das zweite selbstdichtende Produkt (02) 30 bis 90 Gewichtsteile eines Kohlenwasserstoffharzes je hundert Teile festes Elastomer, höchstens 60 Gewichtsteile eines flüssigen Weichmachers je hundert Teile festes Elastomer und höchstens 30 Gewichtsteile Füllstoffe je hundert Teile festes Elastomer umfasst.

10. Luftreifen (10A-10B) nach einem der vorhergehenden Ansprüche, wobei der Kriechfestigkeitsindikator eine Messung der Mooney-Viskosität, die bei 60 °C mit einem Rotor der Größe L durchgeführt wird und wobei die Variationsamplitude des Kriechfestigkeitsindikators (I1, 12) in der selbstdichtenden Schicht (54) im Bereich zwischen 3 und 25 Mooney-Einheiten (MU) liegt.

11. Luftreifen (10A-10B) nach Anspruch, wobei die Variationsamplitude des Kriechfestigkeitsindikators (I1, 12) in der selbstdichtenden Schicht (54) im Bereich zwischen 5 und 20 Mooney-Einheiten (MU) liegt.

12. Verfahren zur Herstellung eines Rohlings eines Luftreifens (10A-10D), **dadurch gekennzeichnet, dass**:
- mindestens eine Schicht (54) aus mindestens einem selbstdichtenden Produkt (O1, 02), genannt selbstdichtende Schicht, auf einer Oberfläche einer Reifenbautrommel aufgebracht wird, wobei die selbstdichtende Schicht (54) einen Kriechfestigkeitsindikator (I1, 12) aufweist, der von der Mittelebene (M) zur Außenseite des Luftreifens (10A-10B) axial ansteigt,
- eine innere Dichtungsschicht (40) in Kontakt mit der selbstdichtenden Schicht (54) (O1, 02) aufgebracht wird.

## Claims

1. Pneumatic tyre (10A-10B) comprising an internal sealing layer (40) partially delimiting the internal volume (V) of the pneumatic tyre, **characterized in that** it comprises a layer (54) of at least one self-sealing product (O1, 02), known as the self-sealing layer, positioned radially on the inside with respect to the internal sealing layer (40), the self-sealing layer (54) having a resistance-to-flow indicator (I1, I2) that increases axially from the median plane (M) towards the outside of the pneumatic tyre (10A-10B).

2. Pneumatic tyre (10A-10B) according to Claim 1, in which the self-sealing product comprises at least one diene elastomer by way of predominant elastomer, between 20 and 90 parts by weight per hundred parts of solid rubber of a hydrocarbon resin, at most 60 parts by weight per hundred parts of solid rubber of a liquid plasticizer the glass transition temperature of which is below -10°C, and at most 60 parts by weight per hundred parts of solid rubber of a filler.

3. Pneumatic tyre (10A-10B) according to Claim 2, in which the liquid plasticizer content in the self-sealing layer (54) is at a maximum in an axially central portion of the self-sealing layer (54) and at a minimum in an axial end portion of the self-sealing layer (54).

4. Pneumatic tyre (10A-10B) according to Claim 3, in which the axial variation in liquid plasticizer content in the self-sealing layer is greater than 5 parts per hundred parts of solid rubber.

5. Pneumatic tyre (10A-10B) according to any one of Claims 2 to 4, in which the fillers content in the self-sealing layer (54) is at a minimum in an axially central portion of the self-sealing layer (54) and at a maximum in an axial end portion of the self-sealing layer (54).

6. Pneumatic tyre (10A-10B) according to any one of the preceding claims, in which the self-sealing product further comprises a cross linking system and in which the cross linking system content is at a minimum in an axially central portion of the self-sealing layer (54) and at a maximum in an axial end portion of the self-sealing layer (54).

7. Pneumatic tyre (10A-10B) according to any one of the preceding claims, in which the self-sealing layer (54) comprises first and second layers (56, 58) respectively of first and second distinct self-sealing products (O1, 02), in which the first layer of first self-sealing product is positioned axially on both sides of the second layer of second self-sealing product positioned in an axially central portion of the pneumatic tyre and in which the first self-sealing product (O1) has a resistance-to-flow indicator (I1) greater than a resistance-to-flow indicator (I2) of the second self-sealing product (02).

8. Pneumatic tyre (10A-10B) according to the preceding claim, in which the first self-sealing product (O1) comprises between 20 and 70 parts by weight of a hydrocarbon resin per hundred parts of solid rubber, at most 20 parts by weight of a liquid plasticizer per hundred parts of solid rubber and at most 60 parts by weight of fillers per hundred parts of solid rubber.

9. Pneumatic tyre (10A-10B) according to Claim 7 or 8, in which the second self-sealing product (02) comprises between 30 and 90 parts by weight of a hydrocarbon resin per hundred parts of solid rubber, at most 60 parts by weight of a liquid plasticizer per hundred parts of solid rubber, and at most 30 parts by weight of fillers per hundred parts of solid rubber.

10. Pneumatic tyre (10A-10B) according to any one of the preceding claims, in which the resistance-to-flow indicator is a Mooney viscosity measurement effected at 60°C using an L-type rotor, and in which the amplitude by which the resistance-to-flow indicator (I1, I2) in the self-sealing layer (54) varies is between 3 and 25 Mooney units (UM).

11. Pneumatic tyre (10A-10B) according to Claim, in which the amplitude by which the resistance-to-flow indicator (I1, I2) in the self-sealing layer (54) varies is between 5 and 20 Mooney units (UM).

12. Method of manufacturing a green pneumatic tyre (10A-10D), **characterized in that**:
- at least one layer (54) of at least one self-sealing product (O1, 02), known as the self-sealing layer, is applied to a surface of a tyre-building drum, the self-sealing layer (54) having a resistance-to-flow indicator (I1, I2) that increases axially from the median plane (M) towards the outside of the pneumatic tyre (10A-10B),
- an internal sealing layer (40) is applied in contact with the self-sealing (O1, 02) layer (54).
